# EUROPEAN PATENT APPLICATION

(11) **EP 1 857 713 A1**
(43) Date of publication of application: **21.11.2007**
(21) Application number: 07075313.2
(22) Date of filing: 26.04.2007
(51) Int. Cl.: F16H 57/08, F16C 23/04

(54) **Thrust cam for a gear wheel transmission**

(30) Priority: 15.05.2006 BE 200600275
(71) Applicant: HANSEN TRANSMISSIONS INTERNATIONAL NV, 2650 Edegem (BE)
(72) Inventor: Leimann, Dirk-Olaf, 2650 Edegem (BE)
(74) Representative: Donné, Eddy

(57) **Abstract**

Thrust cam (1) for a gear wheel transmission (17), characterized in that it is at least made of two separate parts (2,3) which can move in relation to each other.

## Description

The present invention concerns a thrust cam for a gear wheel transmission.

Thrust cams for gear wheel transmissions are already known, in particular when applied in turbo gearboxes which are provided with slide bearings.

It is known that in certain gear wheel transmissions, such as for example in a gear wheel transmission with a pair of gear wheels which are provided with a simple screw gearing, axially directed loads are created which will have to be compensated for in an appropriate manner.

This is often done by supporting the different shafts of the gear wheel transmission in a housing by means of bearings which are capable of absorbing axially directed loads, such as for example cone bearings or the like.

Another known solution consists, however, in making use of one or several what are called thrust cams which make sure that a movement in the axial direction of the gear wheels in relation to each other is excluded, such that the axial loads neutralize each other at the meshing gear wheels of the gear wheel transmission.

Such a thrust cam is typically a ring-shaped element which can be fixed to a first gear wheel of the gear wheel transmission or to the shaft of said gear wheel and which is further provided with a running surface which works in conjunction with a running surface which is provided on the other gear wheel of the gear wheel transmission which meshes in the above-mentioned first gear wheel, whereby the running surfaces are positioned such in relation to each other that an axial movement of the gear wheels in relation to each other is prevented.

In order to be able to absorb axial loads in both directions, two such thrust cams are usually provided, one on each side of the above-mentioned first gear wheel respectively, whereby the other gear wheel is enclosed by the thrust cams on both sides.

It is also known that, under the influence of loads on a gear wheel transmission, a certain deformation is often caused or certain alignment errors are created between the different shafts of the gear wheel transmission.

A disadvantage of the known thrust cams is that, when such deformations or alignment errors occur, the axial load between the gear wheels is transferred in an irregular manner, as a result of which the good working order of the gear wheel transmission is endangered.

Also, the present invention therefor aims to remedy the above-mentioned and other disadvantages.

To this end, the present invention concerns a thrust cam for a gear wheel transmission which is built of at least two separate parts which can move in relation to each other.

An advantage of such a thrust cam is that, thanks to the mobility of the separate parts of the thrust cam in relation to each other, alignment errors and deformations in the gear wheel transmission can be easily compensated for, such that the axial loads can be transferred in a regular manner.

For, in practice, the first part of the thrust cam will follow a first gear wheel or the shaft of that gear wheel, whereas the other part will follow the other gear wheel and can stay well aligned with this other gear wheel, whatever the alignment error between both gear wheels may be.

According to a preferred embodiment of a thrust cam according to the invention, the parts are ring-shaped, whereby a first ring-shaped part, hereafter called the inner ring, has an outer diameter which is smaller than the outer diameter of the other ring-shaped part, hereafter called the outer ring.

An advantage of this embodiment of a thrust cam according to the invention is that it is easy to manufacture with known tools.

According to another preferred embodiment of a thrust cam according to the invention, the inner ring is moreover provided with an outer surface which mainly corresponds to the inner surface of the outer ring, and the inner ring is moreover provided in a tightly fitting manner in the outer ring.

An advantage of this embodiment of a thrust cam according to the invention is that the thrust cam can be provided on the shaft as a whole when being mounted, as with the conventional thrust cams, whereby the thrust cam is nevertheless provided with two parts which can move in relation to each other.

According to the most preferred embodiment of a thrust cam according to the invention, the above-mentioned outer and inner surfaces of the respective rings are additionally spherical.

The present embodiment is very advantageous because it is easy to manufacture and because, thanks to the spherical shape of the above-mentioned inner and outer surface, a large mobility of the inner and outer ring in relation to each other is obtained.

In particular, the present embodiment is useful to compensate for alignment errors and deformations whereby the shafts of the gear wheels of the gear wheel transmission represent a certain angular displacement in relation to each other, either or not locally.

In order to better explain the characteristics of the invention, the following preferred embodiments of a thrust cam for a gear wheel transmission according to the invention are given as an example only, with reference to the accompanying drawings, in which:
figure 1 schematically represents a part of a thrust cam according to the invention, seen as a section;
figure 2 is a section of a planetary gear wheel transmission in which have been applied two thrust cams according to figure 1;
figure 3 represents the part indicated in figure 2 by F3 to a larger scale;
figure 4 illustrates the operation of a thrust cam according to the invention; and
figures 5 to 8, analogous to figure 3, represent other embodiments of a thrust cam according to the invention.

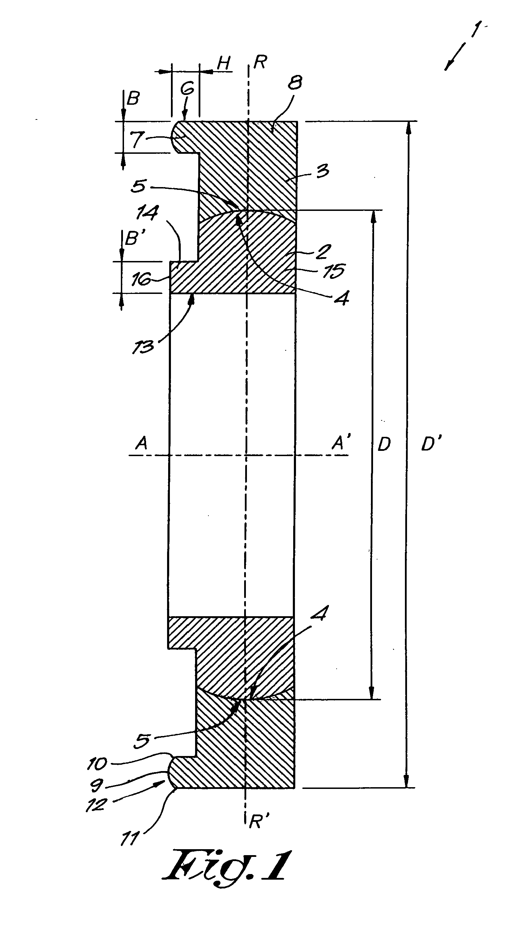

The thrust cam 1 according to the invention represented in figure 1 is built of two separate parts 2 and 3 which can move in relation to each other.

The parts 2 and 3 are ring-shaped in the given example, whereby the first ring-shaped part 2 has an outer diameter D which is smaller than the outer diameter D' of the other ring-shaped part 3.

In what follows we will call these parts the inner ring 2 and the outer ring 3.

Also according to the invention, the inner ring 2 is provided with an outer surface 4 which mainly corresponds to the inner surface 5 of the outer ring 3, whereby the inner ring 2 further fits tightly in the outer ring 3.

In particular, in case of the thrust cam 1 of figure 1, the above-mentioned outer surface 4 and the inner surface 5 of the respective rings 2 and 3 are spherical.

This offers as a practical advantage that the inner ring 2 can be turned at a certain angle in the outer ring 3 without being hindered, in relation to the plane of the rings 2 and 3.

In the example of figure 1, the outer surface 4 of the inner ring 2 is convex and the inner surface 5 of the outer ring 3 is concave.

The outer ring 3 is provided with an edge 7 at its outer perimeter 6 which extends in the axial direction AA'.

According to a radial direction RR', said edge 7 has a width B and it protrudes over a height H from the remaining part 8 of the outer ring 3 in the axial direction AA'.

Further, the edge 7 is rounded, such that the height H of the edge 7 decreases from the centre 9 of the edge 7 towards the radial extreme far ends 10 and 11 of the edge 7.

This results in a rounded surface 12 which may serve as a running surface 12.

On the other hand, opposite the above-mentioned edge 7 is also provided an edge 14 on the outer ring 3 at the inner perimeter 13 of the inner ring, protruding in the axial direction AA' over the same height H from the remaining part 15 of the inner ring 2 in this case.

This edge 14 has a width B' in a radial direction RR' which, in the given example, is of the same order of magnitude as the width B of the edge 7.

Unlike the edge 7, the edge 14 is not rounded in height, as a result of which the edge 14 is provided with a flat surface 16 which is perpendicular to the axial direction AA' which may serve as a bearing face 16.

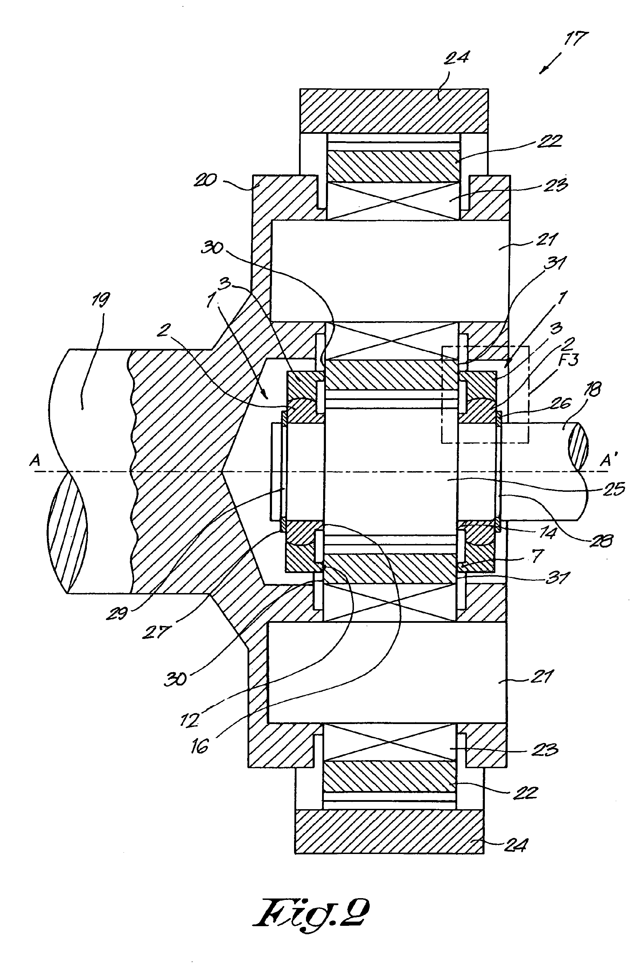

Figure 2 represents a planetary gear unit 17 according to the invention, whereby two thrust cams 1 according to figure 1 are axially locked on the driven shaft 18 of the planetary gear unit 17.

The planetary gear unit 17 of figure 2 further consists of a driving shaft 19 onto which is provided a planet carrier 20, whereby four shafts 21 are provided on the planet carrier 20, only two of which are visible in the section of figure 2, which shafts 21 support planet wheels in a rotating manner via bearings 23.

Of course, such thrust cams 1 according to the invention could just as well be applied in other gear units or in a planetary gear unit 17, whereby only two or three planet wheels 22 are applied instead of four, or whereby more than four planet wheels 22 are provided.

These planet wheels 22 work in conjunction with a planetary gear 24 which is usually fixed to a housing which is not represented in figure 2, and to a sun wheel 25 provided on the driven shaft 18.

The thrust cams 1 are provided on either side of the sun wheel 25, whereby the bearing face 16 of the edge 14 rests on the sun wheel 25 at each thrust cam 1.

The axial locking of the thrust cams 1 on the driven shaft 18 is realized by means of locking rings or circlips 26 and 27 provided in a fitting manner in grooves 28 and 29 which are provided on either side of the sun wheel 25 in the driven shaft 18 respectively.

Further, the thrust cams 1 each rest with their running surfaces 12 on one of the side walls 30 and 31 of the planet wheels 22 respectively, as well as on a corresponding side wall 30 and 31 of the planet wheels 22 which are not represented in figure 2, as a result of which the planet wheels 22 are being axially held between the two thrust cams 1.

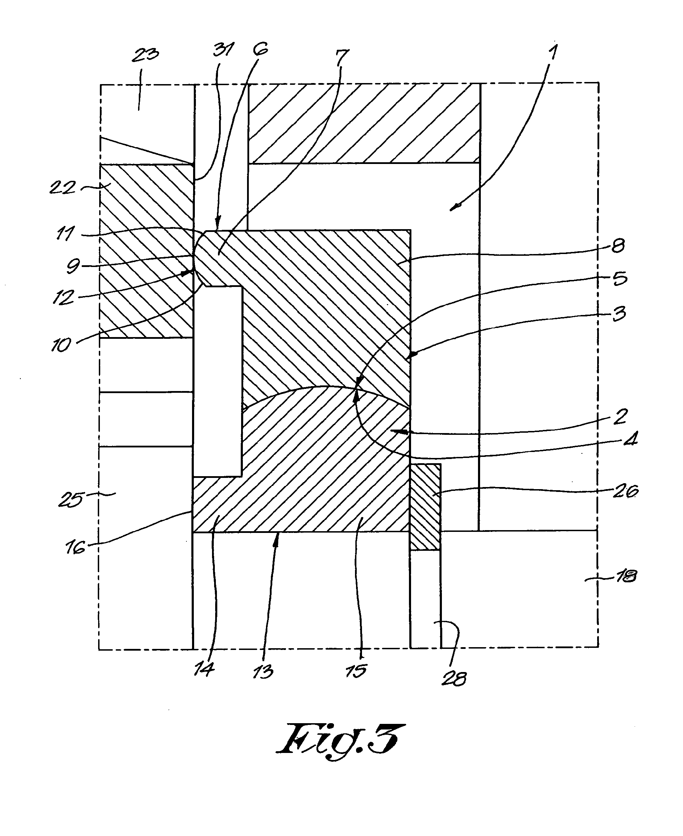

The principle of a thrust cam 1 according to the invention is simple and is illustrated hereafter by means of figures 2 to 4.

It is clear that a rotation of the driving shaft 19 and thus of the planet carrier 20, thanks to the interaction between the planet wheels 22 and the planetary gear 24 and the sun wheel 25, is converted in a rotation of the driven shaft 18.

As is known, in the arrangement of figures 2 to 4, the thrust cams 1 make sure that the axial loads working between the planet wheels 22 and the sun wheel 25 compensate one another.

For these thrust cams 1 are axially fixed to the driven shaft 18 round the sun wheel 25, whereby the thrust cams 1 also enclose the planet wheels 22.

In this manner, the sun wheel 25 and the planet wheels 22 cannot move in relation to each other in the axial direction AA', save for a possible small play.

Such an arrangement with thrust cams 1 is advantageous in that only the driving shaft 19 or only the driven shaft 18 must be axially fixed in the housing by means of the appropriate axial bearings in order to axially fix the planetary gear unit 17 as a whole in the housing.

A typical characteristic of the invention, however, is that the thrust cams 1 are made of two parts 2 and 3 which can move in relation to each other.

This makes it possible to easily compensate for alignment errors which may occur in the planetary gear unit 17 under the influence of the loads.

As a practical example can be mentioned wind turbines which are often equipped with such a planetary gear unit 17, whereby the heavy loads on the blades of the wind turbine's rotor result in substantial deformations and alignment errors between the driving shaft 19 and the driven shaft 18.

Also, in said case it is customary to bearing-mount the driven shaft 18 and the sun wheel 25 in the housing in such a manner that the sun wheel 25 has sufficient freedom of movement left to be able to place itself in a position between the different planet wheels 22 which is as stable as possible.

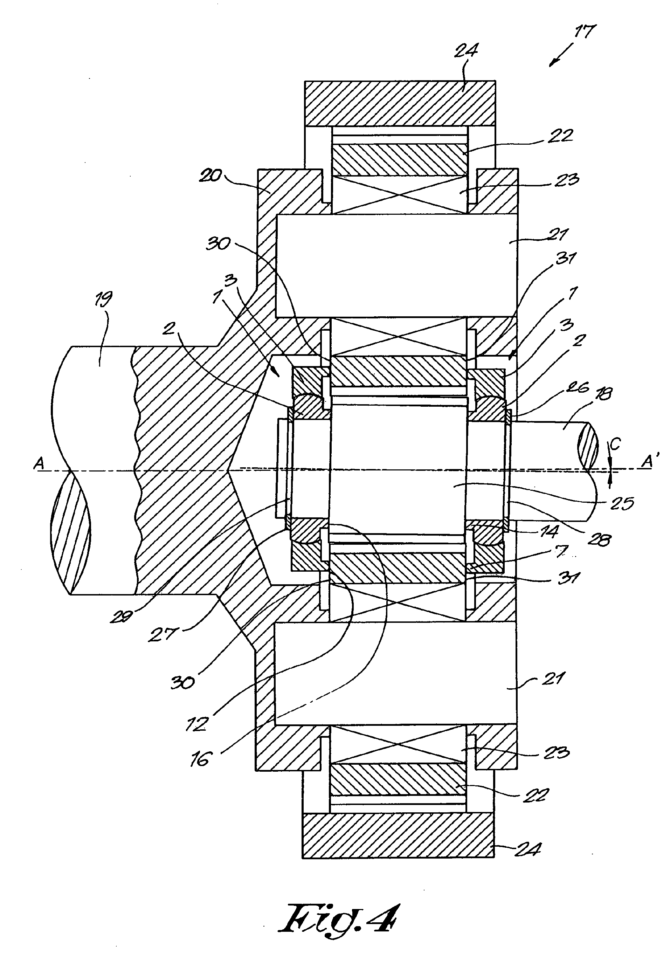

Such an alignment error is schematically represented in a strongly simplified manner in figure 4, whereby the driven shaft 18 is rotated at a certain angle C in relation to the situation whereby both the driven shaft 18 and the driving shaft 19 are perfectly aligned in the axial direction AA'.

Naturally, the deformations and alignment errors are more complicated in practice, but the principle of the invention stays valid.

If an arrangement as in figures 2 to 4 was realized with the conventional thrust cams, which are always made in one piece, an alignment error C between the driving shaft 19 and the driven shaft 18 would inevitably lead to tensions on the sun wheel 25 and/or the planet wheels 22, since the conventional thrust cams are not capable of following the deformations, which tensions are undesirable of course.

Since, according to the invention, the thrust cams 1 are at least made in two parts, however, and in particular thanks to the spherical embodiment of the outer surface 4 of the inner ring 2 and the inner surface 5 of the outer ring 3, the thrust cams 1 according to the invention are capable of absorbing a deformation or alignment error C, as is illustrated by means of figure 4.

For, the inner ring 2 of each thrust cam 1 will follow the movement of the sun wheel 25, whereas the outer ring 3 stays aligned with the planet wheels 22, while the planet wheels 22 nevertheless remain fixed in the axial direction AA'.

In this manner, large tensions in the respective gear wheels 22 and 25 are avoided, and the sun wheel 25 can put itself in a balanced position between the planet wheels 22 without being hindered too much, as a result of which the good working order of the planetary gear unit 17 is guaranteed.

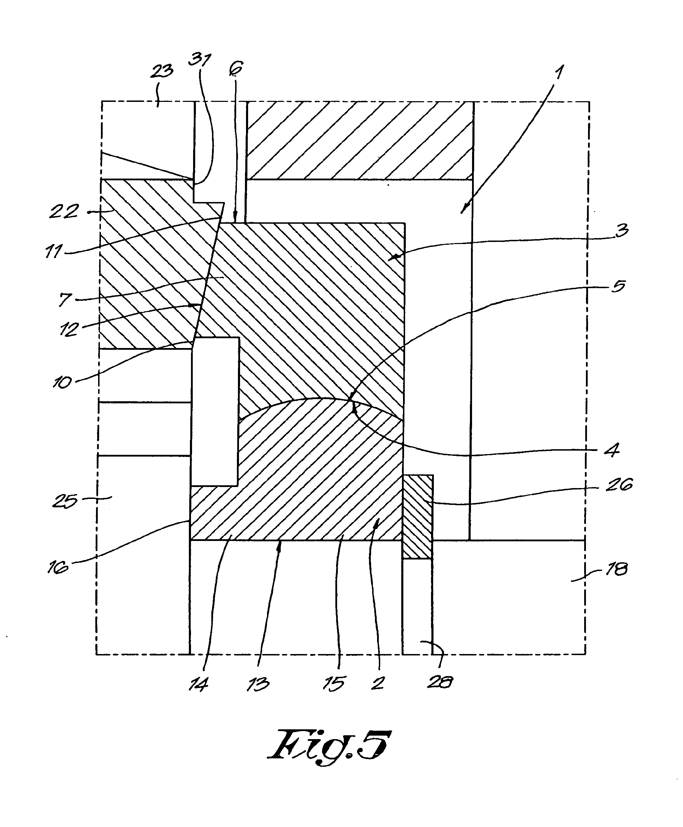

Figure 5 represents an alternative embodiment of a thrust cam according to the invention, whereby the thrust cam 1 is this time provided with an edge 7 with a running surface 12 which is conical instead of being rounded.

In this way, the bearing face with which the thrust cam 1 can absorb axial forces is strongly enlarged.

Further, it should be noted that in the given examples the inner ring 2 of the thrust cams 1 is fixed to the driven shaft 18, whereas the outer ring 3 of the thrust cams 1 can undergo a certain friction of the side walls 30 and 31 of the planet wheels 22, depending on the axial forces at the running surface 12.

Moreover, the inner and outer surfaces 4 and 5 of the thrust cams 1 are spherical, such that a rotation of the outer ring 4 in relation to the inner ring 3 around the axis AA' is made possible.

Thanks to this combination of the spherical embodiment and the above-mentioned friction, it is not excluded that a certain difference in peripheral velocity arises between the inner rings 2 and the outer rings 3.

In some applications, this may be desirable in order to realize a sort of slide bearing.

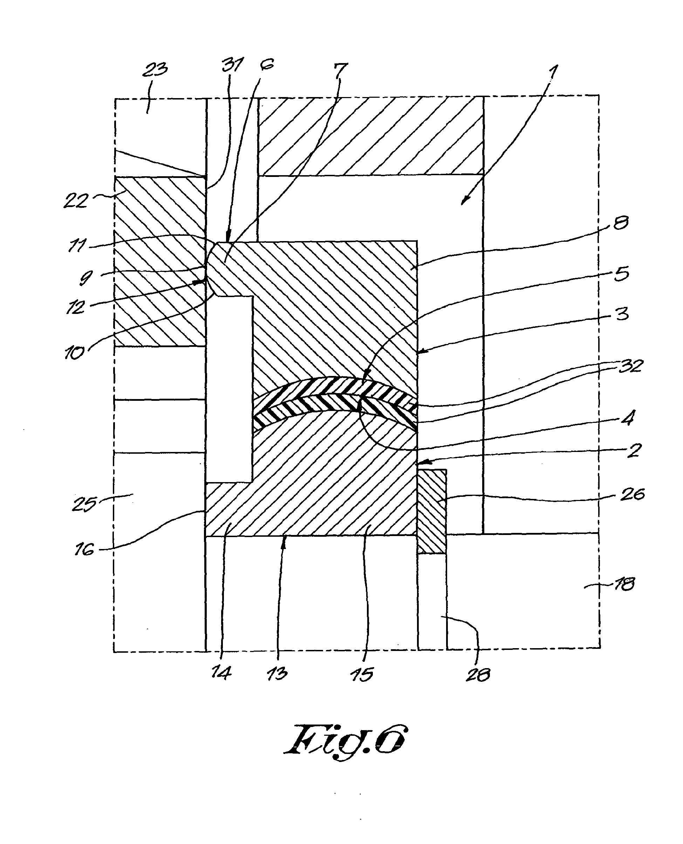

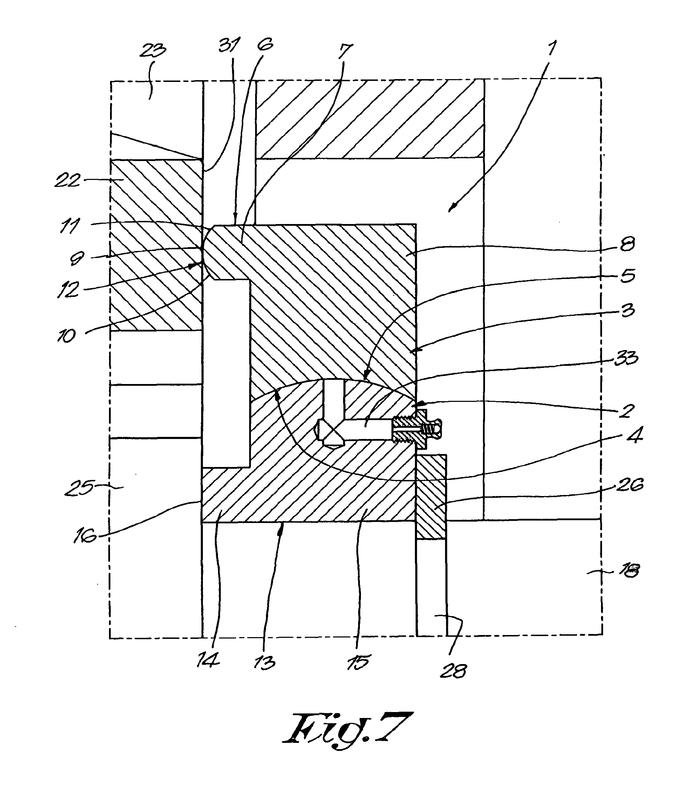

Figures 6 and 7 represent embodiments of a thrust cam 1 whereby this idea has been developed further.

In figure 6, for example, the outer surface 4 of the inner ring 2 and the inner surface 5 of the outer ring 3 are provided with a lubricating coating 32, which facilitates the movement of the rings 2 and 3 in relation to each other, for a rotation round the axial axis AA' as well as for a rotation round a radial direction RR'.

In the embodiment of figure 7, a lubrication is provided for between the rings 2 and 3 by providing a lubrication duct 33 in the inner ring 2 which opens between the surfaces 4 and 5 and via which a lubricating oil can be supplied.

On the other hand, it is possible that a rotation of the outer ring 3 in relation to the inner ring 2 round the axis AA' is undesirable.

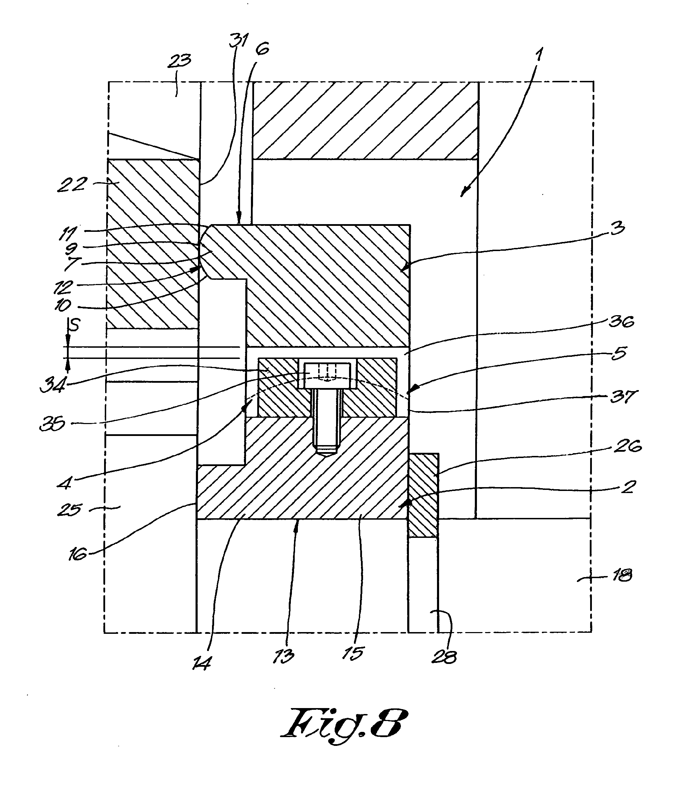

In this case, an embodiment according to figure 8 is a possible solution, whereby locking means are provided which prevent the above-mentioned rotation.

In particular, a locking wedge 34 is fixed to the inner ring 2 by means of a screw bolt 35, which locking wedge 34 fits in a slot 36 which is provided in the outer ring 3 and in a slot 37 which is provided in the inner ring 2.

Further, there is a sufficient play S between the wedge 34 and the outer ring 3, such that a rotation of the outer ring 3 in relation to the inner ring 2 round the axis AA' is made impossible on the one hand, but such that a rotation according to a radial direction RR' of the rings 2 and 3 in relation to each other still remains possible on the other hand. In order to facilitate this latter movement, it is still possible even in this embodiment to provide for a lubrication of the surfaces 4 and 5 or to provide a coating 32 on these surfaces 4 and 5.

In the given embodiments of a thrust cam 1 according to the invention, a spherical surface is always provided for.

It is not excluded to use other shapes, however.

The present invention is by no means restricted to the embodiments described by way of example and represented in the drawings; on the contrary, such a thrust cam for a gear wheel transmission according to the invention can be made in all sorts of shapes and dimensions while still remaining within the scope of the invention.

## Claims

1. Thrust cam (1) for a gear wheel transmission (17), **characterized in that** it is at least made of two separate parts (2,3) which can move in relation to each other.

2. A thrust cam according to claim 1, **characterized in that** the parts (2,3) are ring-shaped.

3. A thrust cam according to claim 2, **characterized in that** a first ring-shaped part (2), hereafter called the inner ring, has an outer diameter (D) which is smaller than the outer diameter (D') of the other ring-shaped part (3), hereafter called the outer ring.

4. A thrust cam according to claim 3, **characterized in that** the inner ring (2) is provided with an outer surface (4) which mainly corresponds to the inner surface (5) of the outer ring (3).

5. A thrust cam according to claim 4, **characterized in that** the inner ring (2) fits tightly in the outer ring (3) .

6. A thrust cam according to any one of claims 4 or 5, **characterized in that** the outer surface (4) of the inner ring (2) is convex and the inner surface (5) of the outer ring (3) is concave.

7. A thrust cam according to claim 6, **characterized in that** the above-mentioned outer and inner surfaces (4,5) of the respective rings (2,3) are spherical.

8. A thrust cam according to claim 7, **characterized in that** the above-mentioned outer and inner surfaces (4,5) of the respective rings (2,3) are provided with a coating (32).

9. A thrust cam according to claim 7, **characterized in that** the above-mentioned outer and inner surfaces (4,5) of the respective rings (2,3) are provided with a lubrication.

10. A thrust cam according to any one of claims 7 to 9, **characterized in that** locking means (34,35) are provided which prevent a rotation of the outer ring (3) in relation to the inner ring (2) round the axial axis (AA').

11. A thrust cam according to any one of the preceding claims, **characterized in that** it is provided with a running surface (12) with which the thrust cam (1) can rest on a gear wheel (22) which rotates in relation to the thrust cam (1).

12. A thrust cam according to claims 3 and 11,
**characterized in that** the running surface (12) is provided on the outer ring (3).

13. A thrust cam according to claim 11 or 12,
**characterized in that** the running surface (12) is rounded.

14. A thrust cam according to claim 11 or 12,
**characterized in that** the running surface (12) is conical.

15. A planetary gear unit (17), **characterized in that** a thrust cam (1) according to any one of the preceding claims is locked onto one of the shafts (18) of the planetary gear unit (17).

16. A planetary gear unit according to claim 15,
**characterized in that** a thrust cam (1) is provided on the shaft (18) of the sun wheel (25).

17. A planetary gear unit according to claim 16,
**characterized in that** a running surface (12) is provided on the thrust cam (1) which works in conjunction with a side surface (30,31) of the planet wheels (22).
